(19) Europäisches Patentamt
European Patent Office
Office européen des brevets

(11) EP 0 736 558 A2

(12) EUROPEAN PATENT APPLICATION

(43) Date of publication:
**09.10.1996 Bulletin 1996/41**

(51) Int Cl.[6]: **C08G 63/64**

(21) Application number: **96302453.4**

(22) Date of filing: **04.04.1996**

(84) Designated Contracting States:
**DE ES FR GB IT NL**

(30) Priority: **08.04.1995 JP 108322/95**
**08.12.1995 JP 345685/95**
**08.12.1995 JP 345686/95**

(71) Applicant: **GENERAL ELECTRIC COMPANY**
**Schenectady, NY 12345 (US)**

(72) Inventors:
- **Nagai, Takashi**
**2972-1 Ishii-cho, Utunomiya City (JP)**
- **Kosaka, Kazunari**
**3711 Dai-machi, Moka City (JP)**
- **Saito, Akihiro**
**1-6-Shimoguri, Utunomiya City (JP)**

(74) Representative: **Szary, Anne Catherine et al**
**London Patent Operation,**
**GE Technical Services Co. Inc.,**
**Essex House,**
**12-13 Essex Street**
**London WC2R 3AA (GB)**

(54) **A polyester polycarbonate composition which is transparent and has outstanding thermal stability**

(57) A transparent polyester/polycarbonate resin composition and process for its preparation, polycarbonate resin having 5-100% terminal hydroxyl groups and polyester resin are melt blended and reacted by esterification in the presence of a catalyst, and acidic substances are subsequently added for deactivating said catalyst and forming a transparent resin which has favorable fluidity and improved stability during melt kneading and retention molding.

EP 0 736 558 A2

## Description

### Field of the Invention

The present invention relates to a polyester/polycarbonate composition which is transparent and has outstanding thermal stability.

### Background of the Invention

As polycarbonate shows outstanding transparency and impact resistance, it is widely used in applications such as materials for containers, but in cases where the substance is used alone, its fluidity is generally low, thus causing problems with moldability.

In order to improve the fluidity of polycarbonate, there are methods for keeping its molecular weight low, but these methods have the problem of inducing a reduction in impact resistance.

For this reason, polycarbonate compositions have been proposed which consist of mixtures of polycarbonate and polyesters such as polybutylene terephthalate and polyethylene terephthalate in order to provide a resin composition which has both the outstanding transparency and impact resistance of polycarbonate and favorable moldability (see Japanese Laid-Open Patent Applications Nos. 73-54160, 74-107354, and 83-18391).

Accordingly, in such conventional resin compositions, sufficient transparency has not yet been achieved. This is considered attributable to the fact that the reaction between the polycarbonate and polyester due to the ester exchange reaction does not proceed.

In order to cause this ester exchange reaction to proceed, resin compositions have been produced in which oligomers of polycarbonate and polyester are reacted in the presence of a catalyst (see Japanese Laid-Open Patent Application No. 89-236235). However, although these resins show outstanding transparency, they are unfavorable from a process standpoint because the reaction requires a long time.

As an improved method, a melt mixing method has been proposed in which polycarbonate having improved reactivity and a terminal hydroxyl group is mixed with polybutylene terephthalate (see Japanese Laid-Open Patent Application No. 91-203956). However, although the resin composition obtained is transparent it undergoes yellow discoloration, and when the resin is retained in a molten state during molding, it tends to turn yellow, giving rise to drawbacks such as limited application.

Moreover, as resins which have low compatibility with polycarbonate, such as polyethylene terephthalate, must be melt kneaded for long periods, they are unfavorable from a process standpoint.

Generally speaking, in order to obtain a transparent composition by melt kneading non-compatibilized polyester and polycarbonate, as it is necessary to carry out kneading for long periods, the resin undergoes yellow discoloration. This situation can be improved to a certain extent by using polycarbonate having a terminal hydroxyl group, but the degree of improvement is still insufficient.

Moreover, as a polycarbonate having a terminal hydroxyl group is used, when melt kneading is carried out with resin using a transition metal catalyst, the kneaded resin composition tends to undergo yellow discoloration.

### Brief Summary of the Invention

The present invention overcomes the problems of conventional technology by comprising a non-transparent polyester/polycarbonate resin composition which shows outstanding fluidity and markedly improved stability during melt kneading and mold retention.

As a result of research conducted in order to solve the above problems, it was discovered that in melt kneading of polyester and polycarbonate, by using polycarbonate containing 5-100% terminal hydroxyl groups and by adding an acidic substance, and as needed, an ester exchange catalyst, it is possible to obtain a non-transparent kneaded resin composition.

Furthermore, it was discovered that by adding the ester exchange catalyst during melt kneading, it was possible to obtain a transparent resin by melt kneading for a short period, and by adding an acidic substance to deactivate the ester-exchange catalyst, it was possible to improve the thermal stability of the composition in a molten state.

Hence, in accordance with the present invention, there is provided a process for making a polyester/polycarbonate resin composition comprising a melt blended polycarbonate resin and polyester resin, said polycarbonate resin containing 5-100% terminal hydroxyl groups, reacting by esterification said polycarbonate and said polyester during melt blending in the presence of a catalyst, and subsequently adding acidic substances for deactivating said catalyst and forming a transparent resin.

A resin composition has been obtained in which polymerization among oligomers of polycarbonate and polyester is carried out in the presence of a catalyst in order to cause this transesterification to proceed (see Japanese Unexamined Patent Application No. 89-236235). However, although this resin is transparent a reactor is required to produce it, and as the required reaction time is long, this resin is far from ideal.

In order to improve on this situation, a method has been proposed in which polycarbonate with improved reactivity and having a hydroxyl terminal group and polyester are melt-kneaded (see Japanese Unexamined Patent Application No.91-203956).

However, this materials has problems such as the fact that it becomes opaque after heat treatment at a temperature close to or greater than the glass transition temperature (such as 150°C for 1 hour). This is considered attributable to insufficient transesterifiction.

If a material does not become opaque in heat treatment at a temperature close to or greater than the glass transition temperature (such as 150°C for 1 hour), but maintains its transparency, it can then be used in a wide range of applications, such as applications involving sterilization and heat-resistant applications, film applications, and hot melt bonding application. This also solves the problems of opacity of the molded product resulting from cooling conditions during molding and changes in size resulting therefrom, as well as opacity due to crystallization caused by phase separation of the polyester occurring in applications using heat and the changes in size resulting therefrom.

## Detailed Description

The present invention improves on these problems of prior art, and its purpose is to provide a transparent polyester/polycarbonate composition having a single glass transition temperature and showing single-phase homology in transmission electron microscopy which is produced by short-term melt-kneading in an extruder, etc., of resins which are essentially incompatible, e.g., polyesters such as polybutylene terephthalate and polyethylene phthalate and polycarbonate.

Moreover, it was discovered that yellow discoloration due to kneading could be prevented by the addition of acid, thus making it possible to obtain a colorless, transparent composition having an extremely high commercial value.

The transparent polyester/polycarbonate resin composition obtained by kneading in this manner is characterized by the fact that it maintains its transparency even after heat treatment at a temperature close to or greater than the glass transition temperature (such as 150°C for 1 hour) and by the fact that it maintains its transparency even in high-temperature treatment such as sterilization.

Moreover, by varying the polyester content, it is possible to obtain a transparent polyester/polycarbonate composition characterized by having a specified glass transition temperature or having outstanding properties such as solvent resistance, etc.

The present invention solves the above problems by comprising a polyester/polycarbonate resin composition in which, during melt blending of polycarbonate containing 5-100% terminal hydroxyl groups and polyester, acidic substances and/or derivatives thereof are added.

The polycarbonate used is aromatic homopolycarbonate or copolycarbonate manufactured by reacting a bivalent phenol and a carbonate precursor. Moreover, the polycarbonate of the present invention may be branched. This type of branched polycarbonate is obtained as a branched thermoplastic branched polycarbonate by reacting a polyfunctional aromatic compound with a bivalent phenol and a carbonate precursor.

Specifically, the present invention solves these problems by comprising a transparent polyester/polycarbonate composition wherein a polycarbonate having a phenolic hydroxyl group terminal percentage of 5% or above and the polyester are melt-kneaded, 0.000005-1 parts by weight of a transesterification catalyst and 0.0001-3 parts by weight of a protonic acid and/or a derivative thereof are added, each with respect to a total of 100 parts by weight of the aforementioned polycarbonate and polyester components.

The phrase "phenolic hydroxyl group terminal percentage of 5% or above" used here indicates that the percentage of the total polymer terminals which are phenolic hydroxyl group terminals is 5-100%, with non-phenolic hydroxyl group terminals accounting for 95-0%

The polycarbonate is an aromatic homopolycarbonate or copolycarbonate manufactured by reacting an aromatic dihydroxy compound and a carbonate precursor.

Moreover, the polycarbonate of the present invention may also be branched. This type of branched polycarbonate may be obtained by reacting a multifunctional aromatic compound with an aromatic dihydroxy compound and a carbonate precusor. Examples of multifunctional aromatic compounds used in manufacturing branched polycarbonate are presented in the specifications of U.S. Patent Applications Nos. 3,028,385, 3,334,154, 4,001,124, and 4,131,576.

The method of manufacturing the polycarbonate of the present invention is well known in and of itself, with known methods including synthesis of polycarbonate by an ester exchange reaction of a bivalent phenol and a carbonic acid diester in a molten state, and the method of reacting a bivalent phenol and phosgene in a molten state (particularly the surface method).

Adjustment of the equivalence ratio of the terminal groups in the polycarbonate may be easily carried out by altering the ratio of the bivalent phenol and carbonic acid diester used as raw materials in manufacturing the polycarbonate by

melt polymerization.

For example, when bisphenol A is used as an aromatic dihydroxy compound and diphenyl carbonate is used as a carbonic acid diester, the polycarbonate terminal groups are phenolic residues originating from the bisphenol A and phenyl groups originating from the diphenyl carbonate, and when the molar ratio of bisphenol A is increased, the equivalence ratio of the phenolic terminal groups (I) and non-phenolic terminal groups (II) in the polycarbonate produced (I)/(II)) is high.

The equivalence ratio of the terminal hydroxyl groups of polycarbonate should be 5-100%, and preferably 20-100%, with a ratio of 30-100% being particularly preferred. If the ratio of terminal hydroxyl groups is low, it becomes necessary to use large amounts of the ester exchange catalyst, thus decreasing the molecular weight of the mixture.

Polycarbonate resin is generally characterized by having the repeated structural units shown in the following formula:

$$-O-A-O-C(=O)-$$

In the above formula, A is a divalent residue of an aromatic dihydroxy compound). The aromatic dihydroxy compound used contains 2 hydroxyl groups as functional groups, and these are mononuclear or polynuclear aromatic compounds which are directly bound to carbon atoms in aromatic nuclei. There are no particular restrictions on these aromatic dihydroxy compounds, and various commonly-known compounds may be used.

A multifunctional compound having a three or more functional groups per molecule may be used. This compound should preferably be present in the amount of 0.03 moles or less with respect to 1 mole of the aromatic dihydroxy compound, and more preferably in the amount of 0.001-0.02 moles, with 0.01-0.02 moles being particularly preferred.

The polycarbonate having a terminal hydroxyl group may be manufactured by methods such as the following.

Specifically, in the case of melt polymerization in manufacturing the polycarbonate, by changing the molar ratio of the divalent phenol and carbonic acid diester used as raw materials, the terminal hydroxyl group volume can be controlled.

For example, in a case where bisphenol A is used as an aromatic dihydroxy compound and phenyl carbonate is used as a carbonic acid diester, the polycarbonate terminal groups are phenolic residues originating from bisphenol A and phenyl residues originating from phenyl carbonate, and when the molar ratio of diphenyl carbonate is increased, the equivalence ratio of the non-phenolic terminal groups (I) and phenolic terminal groups (II) of the polycarbonate produced (I)/(II) becomes high.

Moreover, in addition to the aforementionned method, in which manufacturing is carried out by reacting a divalent phenol and a carbonate precursor, there are methods in which polycarbonate is reacted with a compound having a hydroxyl group.

For example, a polycarbonate having a phenolic hydroxyl group terminal percentage of 5% or above may also be easily manufactured by decomposing the polycarbonate (for example, by hydrolysis). Decomposition methods include that of kneading a mixture of polycarbonate and a compound having a hydroxyl group or carboxyl group and/or water, etc., in a device such as an extruder which is capable of melt-kneading.

In this case, it is preferable to add a catalyst of the present invention can be effectively used as this catalyst.

Provided that the compound having a hydroxyl group is a compound having an alcoholic or phenolic hydroxyl group, the hydroxyl group may be located at any position on the compound; compounds containing one hydroxyl group may be aliphatic, alicyclic, or aromatic compounds having 1-30 carbon atoms or a mixture thereof, with examples including ethanol, butanol, octanol, stearyl alcohol, cyclohexanol, methylcyclohexanol, octylcyclohexanol, phenol, naphthol, cresol, xylenol, t-butylphenol, dioctylphenol, and stearylphenol.

Looking at compounds containing 2 or more hydroxyl groups, in addition to the diols mentioned above and below as examples of the structural components of the polycarbonate or the polyester and compounds having 3 or more hydroxyl groups, glycerol, pentaerythritol, etc., can also be mentioned.

Furthermore, in compounds having 2 or more hydroxyl groups, a portion of the hydroxyl group may be an ester.

Moreover, examples of bi/trivalent phenol and carbonyl precursors include a polycarbonate oligomer with a molecular weight of 5,000 or less having a phenolic hydroxyl group as a terminal using diphenol carbonate and bisphenol A, a polyester oligomer having a molecular weight of 5,000 or less having a phenolic hydroxyl group as a terminal using dicarboxylic acid and bisphenol A, and a polyester oligomer having a molecular weight of of 5,000 or less having a hydroxyl group as a terminal using an aliphatic or alicyclic diol and a dicarboxylic acid.

Among these substances, an aromatic diol such as bisphenol A or polycarbonate oligomer is preferred.

Examples of compounds containing a carboxyl group include aliphatic, alicyclic, or aromatic monocarboxylic acids having 2-30 carbon atoms such as acetic acid, butyric acid, stearic acid, and benzoic acid.

Examples of compounds containing 2 or more carboxyl groups include the dibasic acids mentioned below as structural components, citric acid, and malic acid.

Moreover, examples of decomposable compounds include nucleophilic compounds such as amines, dibasic or polybasic acids, salts, etc.

In order to maintain the physical properties of the polycarbonate, the amount of such compounds having a hydroxyl group, water, or nucleophilic compounds added with respect to 100 parts by weight of the polycarbonate should be 0.001-10 parts by weight, preferably 0.01-5 parts by weight, more preferably 0.03-3 parts by weight, and even more preferably 0.05-2 parts by weight, with the optimum range being 0.05-1 part by weight.

Looking at the ratio of terminal hydroxyl groups, the equivalence ratio of the phenolic terminal groups (I) to the non-phenolic terminal groups (II) ((I) : (II)) should be 5 : 95-100 : 0, and preferably 10 : 90-100 : 0.

Thus by using polycarbonate having a terminal hydroxyl group, transparency following melt-kneading with polyester can be improved compared to polycarbonate not having a terminal hydroxyl group.

The polyester may be a polyester consisting of a diol (or its ester-forming derivative) and a dicarboxylic acid (or its ester-forming derivative), and together with both the diol component and the dicarboxylic acid component, the following compounds may be used either individually or in combination, and it may contain a substance having hydroxyl groups and carboxylic acid groups in the molecule, such as hydroxybenzoic acid, or a substance with ester compounds incorporated into the molecule such as raruton.

Examples of the diol component include aliphatic diols such as ethylene glycol, propylene glycol, 1,4-butanediol, hexylene glycol, neopentyl glycol, diethylene glycol, triethylene glycol, and 1,4-cyclohexanedimethanol, aromatic bivalent phenols such as resorcinol, hydroquinone, and naphthalenediol, polyglycols having a molecular weight of 400-6,000 such as polyethylene glycol, polypropylene glycol, and polytetramethylene glycol, or the bisphenols presented in Japanese Laid-Open Patent Application No. 91-203956, such as bisphenol A or bisphenol B.

Examples of the dicarboxylic acid component include aromatic dicarboxylic acids such as isophthalic acid, terephthalic acid, ortho-phthalic acid, 2,2'-biphenyldicarboxylic acid, 3,3'-biphenyldicarboxylic acid, 4,4'-biphenyldicarboxylic acid, diphenyl ether 4,4'-dicarboxylic acid, 1,5-naphthalenedicarboxylic acid, and 2,6-naphthalenedicarboxylic acid, and alkyl dicarboxylic acids such as adipic acid, succinic acid, and cyclohexane dicarboxylic acid.

Another example which can be mentioned are polyesters composed of monomers having hydroxyl groups and carboxylic acid groups in the molecule, such as caprolactam.

The polyesters may be used either individually or in combination. Particularly preferred examples of such polyesters include polyethylene terephthalate and polybutylene terephthalate.

The catalyst used in manufacturing the polyester may be any ordinary catalyst, such as an antimony compound, a titanium compound, a tin compound, or a germanium compound.

Furthermore, in the polyester obtained by polymerization of a carboxylic acid ester and a diol, the greater the number of hydroxyl group terminals originating from the diol, the more transparent the kneading composition with polycarbonate of the present invention will be.

Among polyesters, polyesters of aromatic dicarboxylic acid and alkylene glycol are preferred, with specific examples including polyethylene terephthalate, polybutylene terephthalate, polyethylene naphthalate, poly-1,4-cyclohexylene methylene terephthalate, poly(1,4-cyclohexylene methylene terephthalate-co-iso-phthalate), poly(1,4-butylene terephthalate-co-isophthalate), and poly(ethylene-co-1,4-cyclohexylene methylene terephthalate). Among these substances, polyethylene terephthalate and polybutylene terephthalate are particularly preferred.

In carrying out kneading, the component ratio by weight between the polycarbonate and the polyester should be 99/1-1/99, preferably 95/5-20/80, more preferably 90/10-25/75, and even more preferably 85/15-30/70, with a ratio of 80/20-40/60 being particularly preferred and the optimum range being 70/30-50/50.

Furthermore, the intrinsic viscosity of the polycarbonate (IV:methylene chloride, 25°C) should be 0.3-1.0 dl/g, and preferably 0.35-0.8 dl/g, with an intrinsic viscosity of 0.4-0.7 dl/g being particularly preferred, and the intrinsic viscosity of the polyester (IV:tetrachloroethane/phenol = 2/1,30°C) should be 0.3-2.0 dl/g, and preferably 0.5-1.7 dl/g, with an intrinsic viscosity of 0.6-1.4 dl/g being particularly preferred. If the IV is lower than the above values, the mechanical strength of the kneading composition will decrease, and if it is higher, moldability will decrease.

Protonic acids are effective as the acidic substance added in the method of the present invention, and a protonic acid having a pKa value of 4 or less is particularly preferable. Moreover, one can also mention sulfonic acid esters and ammonium salts of acids having a pKa value of 4 or less. These substances may be added either individually or in combination.

Various acids may be mentioned as examples of the protonic acid used. In the case of the weak acid acetic acid, butyric acid, citric acid, and carboxylic acids such as malic acid, inorganic acids such as boric acid, monosodium carbonate, and monosodium phosphate, phenols such as phenol, cresol, and xylenol, and mono- and diesters of mono (2,4-di-t-butylphenyl) phosphate, di(2,4-di-t-butylphenyl) phosphate, phenyl phosphite, methyl phosphate, di (2,4-dimethylphenyl) phosphate, and diethyl phosphite, a somewhat increased amount must be added in order to allow the additive effect to be sufficiently displayed. For this reason, acids having a pKa value of 4 or less are preferred as the protonic acid.

Examples of acids having a pKa value of 4 or less include phenols having an electron-withdrawing group as a

substituent such as 2,4-dinitrophenol and 2,4,6-trinitrophenol, carboxylic acids such as formic acid and methoxyacetic acid, carboxylic acids having electron-withdrawing groups at the a position such as trifluoroacetic acid, trichloroacetic acid, 1,1-difluoropropionic acid, monochloroacetic acid, dichloroacetic acid, monofluoroacetic acid, nitroacetic acid and cyanoacetic acid, aromatic carboxylic acids having an electron-withdrawing group such as m-nitrobenzoic acid, 2,4-dinitrobenzoic acid, and 2,4,6-trinitrobenzoic acid, dicarboxylic acids such as oxalic acid, 2-carboxypropionic acid, malonic acid, succinic acid, fumaric acid, and maleic acid, aromatic dicarboxylic acids such as phthalic acid, isophthalic acid, terephthalic acid, and 1,3-naphthalenedicarboxylic acid, inorganic acids such as hydrochloric acid, oxalic acid, nitric acid, iodic acid, perchloric acid, periodic acid, and sulfuric acid, sulfonic acids such as benzenesulfonic acid, p-toluenesulfonic acid, naphthalenesulfonic acid, and sulfonylfluorosulfonic acid, and phosphoric acids such as phosphoric acid, phosphorous acid, hypophosphorous acid, pyrophosphoric acid, metaphosphoric acid, and polyphosphoric acid.

Examples of the sulfonic acid ester include methyl benzenesulfonate, ethyl benzenesulfonate, butyl benzenesulfonate, butyl p-toluenesulfonate, phenyl p-toluenesulfonate, benzyl p-toluenesulfonate, butyl naphthalenesulfonate, and butyl methanesulfonate.

Examples of the salt composed of an acid having a pKa value of 4 or less and a nitrogen-containing basic compound include the aforementioned acid having a pKa value of 4 or less and ammonium hydroxides having an alkyl or aryl group such as tetramethylammonium hydroxide, tetraethylammonium hydroxide, tetrabutylammonium hydroxide, and tetraphenylammonium hydroxide, tertiary amines such as trimethylamine, triethylamine, trioctylamine, triphenylamine, and dibenzylmethylamine, secondary amines having the formula $NHR_2$ (where R is an alkyl or aryl group such as methyl, ethyl, phenyl, benzyl, or tolyl, primary amines having the formula $NHR_2$ (where R has the same meaning as described above), and salts with pyridine, methylpyridine, methoxypyridine, quinoline, imidazole, or ammonia.

As the ester exchange catalyst, the following compounds may be used either individually or in combination.

Examples of Lewis acid compounds include transition metal compounds such as titanium acetate, titanium oxalate, titanium(IV) butoxide, titanium(IV) ethoxide, titanium(IV) 2-ethylhexyloxide, titanium(IV) isopropoxide, titanium(IV) methoxide, titanium(IV) propoxide, titanium(IV) oxide acetylacetonate, titanium oxide, tin acetate, tin oxalate, tin acetylacetonate, tin oxide, tin phthalocyanine, tin 2-ethylhexanoate, triphenyltin chloride, tributyltin acetate, tin oxide, manganese benzoate, manganese stearate, manganese carbonate, manganese 2-ethylhexanoate, manganese ethylenediaminetetraacetate, manganese formate, manganese phosphate, zinc stearate, zinc benzoate, zinc 2-ethylhexanoate, zinc ethylenediaminetetraacetate, zinc salicylate, antimony trioxide, antimony trichloride, germanium oxide, and germanium acetate.

Examples of the basic compound include metals such as alkali metal compounds and alkaline earth metal compounds and nitrogen-containing basic compounds. Examples of metal compounds include sodium hydroxide, potassium hydroxide, lithium hydroxide, sodium bicarbonate, potassium bicarbonate, lithium bicarbonate, sodium carbonate, lithium carbonate, potassium carbonate, sodium acetate, potassium acetate, sodium stearate, potassium stearate, sodium hydroxyborate, potassium hydroxide, barium hydroxide, magnesium hydroxide, barium bicarbonate, calcium bicarbonate, barium carbonate, magnesium carbonate, calcium carbonate, calcium acetate, barium acetate, barium stearate, calcium stearate, sodium salts, potassium salts, and lithium salts of phenol, and sodium salts, potassium salts, and lithium salts of bisphenol A. Examples of the nitrogen-containing basic compound include ammonium hydroxides having an alkyl or aryl group such as tetramethylammonium hydroxide ($Me_4NOH$), tetraethyl ammonium hydroxide, tetrabutylammonium hydroxide, and tetraphenylammonium hydroxide, borohydrides such as tetramethylammonium borohydride ($Me_4NBH_4$), tertiary amines such as trimethylamine, triethylamine, trioctylamine, triphenylamine, and dibenzylmethylamine, secondary amines having the formula $NH_2$ (in the formula, R is an alkyl or aryl group such as methyl, ethyl, phenyl, benzyl, or tolyl), primary amines having the formula $NRH_2$ (in the formula, R is the same as explained above), pyridine, methylpyridine, methoxypyridine, quinoline imidazole, and ammonia.

Examples of the heat-decomposable basic compound include ammonium hydroxides, such as ammonium hydroxides having an alkyl or aryl group, including tetramethylammonium hydroxide, tetraethylammonium hydroxide, tetrabutylammonium hydroxide, and tetraphenylammonium hydroxide.

The polyester and polycarbonate may be used in any desired proportion. The polycarbonate A) may be used in the amount of 3-97 parts by weight, and preferably 5-95 parts by weight, with the amount of 20-95 parts by weight being particularly preferred.

The acidic substance added during melt kneading should be added in the amount of 0.0001.1 parts by weight with respect to a total of 100 parts by weight of polycarbonate and polyester components, and preferably 0.001-0.1 parts by weight with the amount of 0.001-0.1 parts by weight being particularly preferred.

If more than 1 part by weight of the acidic substance is added with respect to 100 parts by weight of the resin, the resin will decompose during kneading, and its mechanical properties will not be maintained. Moreover, if less than 0.0001 parts by weight is added, the favorable color-matching improving effect of the acidic substance will not be manifested.

The ester exchange catalyst added during melt kneading should be added in the amount of 0.1-1 times the amount of the acidic substance in the case of a Lewis acid compound or alkali metal or alkaline earth metal compound, and in

the case of a hydrogen-containing basic compound, it may be added in the amount of 3 times the acidic substance. On the other hand, in the case of a decomposable nitrogen-containing basic compound, it may be added in amounts up to 10 times the amount of the acidic compound.

In the case of metal compounds which essentially do not disperse, when amounts are added which are greater than the amount of the acidic substance, the effect of the acidic substance of improving color-matching properties tends not to be manifested. On the other hand, in the case of nitrogen-containing basic compounds and decomposable nitrogen-containing basic compounds, as dispersion or dispersion/decomposition occurs during melt kneading, these may be added in amounts greater than the metal compound, but when they are added in amounts 3 and 10 times greater respectively, this is unsuitable because gelation occurs during melt kneading.

Furthermore, in order to cause the additive effect of the ester exchange catalyst to become more pronounced, the acidic substance may be fed from the side into an extruder after the ester exchange reaction has essentially been completed, or it may preferably be added separately, with 2 kneadings taking place, etc.

Moreover, the polycarbonate and polyester components may be applied over a broad range, but the component ratios shown below may be used. 10-95 parts by weight of polycarbonate 90-5 parts by weight of the polyester, and 0.0001-1 parts by weight of the acidic substance with respect to a total of 100 parts by weight of the polycarbonate and polyester components; preferably, 40-95 parts by weight of the polycarbonate, 60-5 parts by weight of the polyester, and 0.001-0.1 parts by weight of the acidic substance with respect to a total of 100 parts by weight of polycarbonate and polyester components; and more preferably, 50-90 parts by weight of the polycarbonate, 50-10 parts by weight of the polyester, and 0.001-0.1 parts by weight of the acidic substance with respect to a total of 100 parts by weight of polycarbonate and polyester components.

It is contemplated that any commonly-known transesterification catalyst may be used. Examples of Lewis acid-type catalysts include tin compounds such as dibutyl tin oxide, tin oxalate, tin acetate, tin oxide, dibutyl tin dimethoxide, and butyl tin hydroxide oxide, titanium compounds such as tetrabutoxy titanium, tetraphenoxy titanium, titanium oxide, and titanium oxalate, antimony compounds such as antimony trioxide, antimony oxide tartrate, zinc compounds such as zinc acetate, zinc stearate, and zinc acetylacetone, boric acid compounds such as triphenoxy boron and zinc borate, germanium compounds such as germanium oxide and germanium ethoxide, manganese acetate, and cobalt acetate. Examples of basic catalysts which may be used include organic basic catalysts, alkali metals, and alkaline earth metals. Examples of organic basic compounds include ammonium hydroxides having an alkyl or aryl group such as tetramethylammonium hydroxide, tetraethylammonium hydroxide, tetrabutylammonium hydroxide, and tetraphenylammonium hydroxide and salts of the aforementioned ammonium and acids having a pKa value weaker than 4. Morever, examples of hydrogen-containing basic compounds other than those mentioned above include tertiary amines having the general formula NR3 (where R indicates an alkyl or aryl group having 1-25 carbon atoms such as a methyl, ethyl, phenyl, benzyl, or toluyl group), such as triethylamine, tributylamine, trioctylamine, triphenylamine, or dibenzyl methylamine, a secondary or primary amine having the general formula NHR2 or NH2R (where R is the same as indicated above), or pyridine, methyl pyridine, methoxy pyridine, quinoline, or imidazole. Moreover, tetraalkyl or aryl phosphonium hydroxides such as tetrabutyl phosphonium hydroxide may also be mentioned. Looking at alkali metal or alkaline earth metal compounds, examples of inorganic compounds include alkali metals such as sodium, potassium, lithium, and cesium, alkaline earth metal hydroxides of calcium, magnesium, barium, etc., hydrides, and amides. Furthermore, examples of salts with organic acids include carboxylate and salts with phenolic bydroxyl groups.

The amount of the transesterification catalyst added with respect to a total of 100 parts by weight of the polycarbonate and polyester components should be 0.0001-1 parts by weight, and preferably 0.0005-0.5 parts by weight in the case of Lewis acid catalysts, with an amount of 0.001-0.1 parts by weight being particularly preferred and 0.005-0.05 being the optimum range. Moreover, in the case of a basic catalyst, the amount should be 0.00001-0.1 parts by weight, and preferably 0.00005-0.05 parts by weight, with the amount of 0.0001-0.01 parts by weight being particularly preferred and 0.0005-0.005 parts by weight being the optimum range.

Moreover, a Lewis acid catalyst and a basic catalyst may be used simultaneously, and in this case, compared to cases in which these individual components are used alone, one may decrease the amount of the catalysts used and decrease their molecular weight during kneading.

If the amount added is less than the above-mentioned ranges, the additive effect will not appear, and if it is more than these ranges, this will cause a decrease in molecular weight during kneading and result in impairment of physical properties.

Concerning the protonic acid and/or derivative thereof used, any protonic acid will be effective. The derivative is a compound which shows acidity during granulation due to heat, reaction with the resin, etc., such as a sulfonic acid ester or an ammonium salt of a strong acid.

Moreover, in acids which are dibasic or polybasic, one may use either a partially esterified compound or a partial metallic salt. Examples of these acidic compounds are given below, and these may be used either individually or in combination.

Examples of protonic acids include plenols such as phenol, cresol, and xylenol, phenols having an electron attractive group as a substituent such as 2,4-dinitrophenol and 2,4,6-trinitrophenol, carboxylic acids such as formic acid, methoxyacetic acid, acetic acid, butyric acid, citric acid, and malic acid, carboxylic acids having an electron attractive group at position a such as trifluoroacetic acid, trichloroacetic acid, 1,1-difluoropropionic acid, monochloroacetic acid, dichloroacetic acid, monofluoroacetic acid, nitroacetic acid, and cyanoacetic acid, aromatic carboxylic acids having an electron attractive group as a substituent such as m-nitrobenzoic acid, 2,4-dinitrobenzoic acid, and 2,4,6-trinitrobenzoic acid, dicarboxylic acids such as oxalic acid, 2-carboxypropionic acid, malonic acid, succinic acid, fumaric acid, and maleic acid, aromatic dicarboxylic acids such as phthalic acid, isophthalic acid, terephthalic acid, and 1,3-naphthalene dicarboxylic acid, inorganic acids such as boric acid, bromine acid [sic], nitric acid, iodic acid, perchloric acid, periodic acid, bromic acid, and sulfuric acid, sulfonic acids such as benzenesulfonic acid, p-toluenesulfonic acid, naphthalenesulfonic acid, methylsulfonic acid, and fluorosulfonic acid, and phosphoric acids such as phosphoric acid, phosphorous acid, hypophosphorous acid, pyrophosphoric acid, metaphosphoric acid, and polyphosphoric acid.

Among these substances, acids having a pKa value of 10 or less, preferably 6 or less, and more preferably 4 or less should be used.

Examples of ester derivatives include sulfonic acid esters such as methylbenzene sulfonate, ethylbenzene sulfonate, butylbenzene sulfonate, butyl p-toluene sulfonate, phenyl p-toluene sulfonate, benzyl p-toluene sulfonate, butyl naphthalene sulfonate, and butylmethyl sulfonate, mono- and diesters such as mono(2,4-ditertiarybutylphenyl)phosphate, di(2,4-ditertiarybutylphenyl)phosphate, monophenyl hypophosphate, dimethyl phosphate, di-(2,4-dimethylphenyl)phosphate, and diethyl hypophosphate, dimethyl sulfuric acid, etc.

Moreover, examples of the salt derivative composed of the aforementioned protonic acid and a nitrogen-containing basic compound include ammonium salts of alkyl, aryl, etc., such as tetramethylammonium, tetraethylammonium, tetrabutylammonium, and tetraphenylammonium.

Furthermore, examples of metallic salt derivatives include monosodium carbonate, monosodium phosphate, monoammonium phosphate, disodium phosphate, monopotassium phosphate, acid sodium pyrophosphate, dilithium phosphate, magnesium phosphate, monosodium phosphite, disodium phosphite, monopotassium phosphite, dilithium phosphite, potassium phosphite, monosodium oxalate, monopotassium phthalate, monosodium borate, and monopotassium sulfate.

Among these substances, ammonium sulfonate, monosodium phosphate, and acid sodium pyrophosphate are preferred.

The amount of the acid component added with respect to a total of 100 parts by weight of the polycarbonate and polyester components should be 0.0001-3 parts by weight, preferably 0.001-1 parts by weight and more preferably 0.005-0.5 parts by weight, with 0.01-0.1 parts by weight being even more preferable and 0.02-0.08 parts by weight being the optimum range. If the amount of Component D) added is less than 0.0001 parts by weight, the additive effect will not manifest itself, and if it is greater than 3 parts by weight, this will have an adverse effect on the resin component during granulation and molding, causing an undesirable reduction in mechanical strength.

Kneading may be carried out in any device equipped with a melt-kneading function, such as a monoaxial or biaxial extruder, a kneader, a roller, a mixer, or a vertical or horizontal tank equipped with an agitation function. Among these methods, that of using an extruder offers the advantage of short retention time and is also preferred from the standpoint of productivity.

Furthermore, in carrying out kneading, the various components may be kneaded in any desired order, but the method of pre-kneading all of the components except the acid component and then adding and kneading the acid component or the method of adding the acid component during kneading by a method such as the side feed method are preferred from the standpoint of improving transparency.

Furthemore, one may take advantage of the properties of the transparent polyester/polycarbonate composition obtained according to the present invention in molded product applications such as films, sheets, or containers or lids making use of such films or sheets in vacuum molding, etc., or optical applications including recording media such as lenses and CDs.

Moreover, as a composition can be obtained with any desired glass transition temperature, this makes it suitable for a wide variety of applications, i.e., lamination or layered applications such as heat sealing, heat- and chemical-resistant bottles and medical products, gas barrier applications, and application in substrate materials consisting of blends of other resins. It can also be used in applications which require retention of aroma or flavor.

Moreover, as the polyester/polycarbonate composition of the invention has outstanding fluidity, it is also suitable for injection molding applications, particularly thin-walled injection molding applications (such as housings for notebook personal computers, telephones, and cameras, etc.). Furthermore, it can also be applied in various fields such as extrusion molding, compression molding, and blow molding.

Moreover, dyes, pigments, reinforcing agents, fillers, flame-retardants, stabilizers (thermal, acid-resistant, and weather-proofing stabilizers), lubricants, mold-releasing agents, plasticizers, antistatic agents, etc., may be added to the polyester/polycarbonate composition of the present invention, provided this does not adversely affect the purpose of the invention.

Examples of such reinforcing agents and fillers include oxides such as aluminum, iron, and titanium silicate, mica, talc, glass beads, glass fibers, glass flakes, novaculite, carbon fibers, and carbon powder. These reinforcing agents and fillers may be selected as appropriate and used either individually or in combination. Furthermore, these additives should preferably be used within the range of 1-60 parts by weight with respect to an ordinary resin composition.

Examples of flame retardants include bromo-containing compounds, antimony trioxide, and antimony phosphate.

Examples of stabilizers include phosphorous-class stabilizers such as tris(2,4-di-t-butylphenyl) phosphite, tri(nonylphenyl) phosphite, hindered phenol-class stabilizers such as Irgafos 1010 (commercial name: manufactured by Ciba-Geigy Co.), benzotriazole-class stabilizers such as UV5411 (commercial name: manufactured by Cyanamid Japan), Chinubin 234 (commercial name: manufactured by Ciba-Geigy Co.), and thiols.

Kneading and molding of the resin composition according to the present invention were carried out as follows. Melt kneading was carried out using a 30-mm biaxial extruder manufactured by Nihon Seikojo with a cylinder temperature of 260-290°C.

Molding was carried out using a Model PS60 injection molding machine manufactured by Nissei Jushi Kogyo K. K., and test specimens were prepared at a cylinder temperature of 270-290°C and a metal mold temperature of 60-90°C.

Tests using the test specimens prepared as described above were conducted as follows.

**Color-matching (YI):**

Injection-molded test pieces were measured by the transmission method using the ND-1001DP manufactured by Nihon Denshoku Kogyo (x, y, and z value were measured, and yellowing index (YI) was determined using the following equation.

$$YI = (1.277\ X - 1.060\ Z) * 100/Y$$

**Haze:**

The haze of injection-molded test pieces was measured using the NDH-200 manufactured by Nihon Denshoku Kogyo K.K.

**Retention stability:**

After resin was retained in the cylinder of an injection molding machine for 10 minutes at a temperature of 270°C, injection molding was carried out at this temperature, and the YI and haze of this molded plate were measured.

There are no particular restrictions on the aromatic dihydroxy compound, with a variety of commonly-known compounds being suitable for use. Examples include compounds having the following formula:

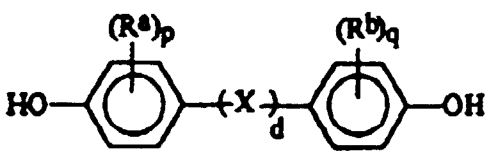

**Chemical Formula 1**

(where $R^a$ and $R^b$ are individual halogens or monovalent hydrocarbon groups, X is - $C(R^c)$ $(R^d)$-, -$C(=R^e)$-, -O-, -S-, -SO-, or - $SO_2$-, $R^c$ and $R^d$ are individual hydrogen atoms or monovalent hydrocarbon groups, $R^e$ is a bivalent hydrocarbon group, and p and q are individual integers from 0-4. d is the integer 0 or 1),

such as a bis(hydroxyaryl)alkane including bis(4-hydroxyphenyl)methane, 1,1-bis(4-hydroxyphenyl)ethane, 2,2-bis (4-hydroxyphenyl)propane, 2,2-bis(4-hydroxyphenyl)butane, 2,2-bis(4-hydroxyphenyl)octane, bis(4-hydroxyphenyl) phenylmethane, 2,2-bis(4-hydroxy-3-methylphenyl)propane, 2,2-bis(4-hydroxy-3,5-dimethyldiphenyl)propane, 1,1-bis (4-hydroxy-t-butylphenyl)propane, 2,2-bis(4-hydroxy-3-bromophenyl)propane, or 2,2-bis(4-hydroxy-3,5-dibromophenyl)propane; a bis(hydroxyaryl)cycloalkane such as 1,1-bis(4-hydroxyphenyl)cyclopentane, or 1,1-(4-hydroxyphenyl) cyclohexane; a dihydroxyaryl ether such as 4,4'-dihydroxydiphenyl ether or 4,4'-dihydroxy-3,3'-dimethyldiphenyl ether; a dihydroxydiaryl sulfide such as 4,4'-dihydroxydiphenyl sulfide or 4,4'-dihydroxy-3,3'-dimethyldiphenyl sulfide; a dihydroxydiaryl sulfoxide such as 4,4'-dihydroxydiphenyl sulfoxide or 4,4'-dihydroxy-3,3'-dimethyldiphenyl sulfoxide; a dihydroxydiaryl sulfone such as 4,4'-dihydroxydiphenyl sulfone or 4,4'-dihydroxy-3,3'-dimethyldiphenyl sulfone, or 4,4'-bisphenol, etc., but the compound is not limited to the above. Among these compounds, the use of 2,2-bis(4-hydroxyphenyl)propane is particularly preferred. In addition to the above, as the aromatic dihydroxy compound, one may also use a compound having the following general formula:

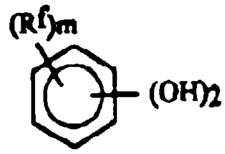

**Chemical Formula 2**

(where $R^f$ indicates individual hydrocarbon groups having 1-10 carbon atoms or their halogen compounds or halogen atoms and m is an integer from 0 to 4),
such as resorcinol and substituted resorcinol, including 3-methylresorcinol, 3-ethylresorcinol, 3-propylresorcinol, 3-butylresorcinol, 3-t-butylresorcinol, 3-phenylresorcinol, 3-cumylresorcinol, 2,3,4,6-tetrafluororesorcinol, or 2,3,4,6-tetrabromoresorcinol; catechol; or hydroquinone or a substituted hydroquinone such as 3-methylhydroquinone, 3-ethylhydroquinone, 3-propylhydroquinone, 3-butylhydroquinone, 3-t-butylhydroquinone, 3-phenylhydroquinone, 3-cumylhydroquinone, 2,3,5,6-tetramethylhydroquinone, 2,3,5,6-tetra-t-butylhydroquinone, 2,3,5,6-tetrafluorohydroquinone, or 2,3,5,6-tetrabromohydroquinone, etc., or a compound such as 2,2,2',2'-tetrahydro-3,3,3',3'-tetramethyl-1,1'-spirobi[1H-indene]-7,7'-diol having the following formula:

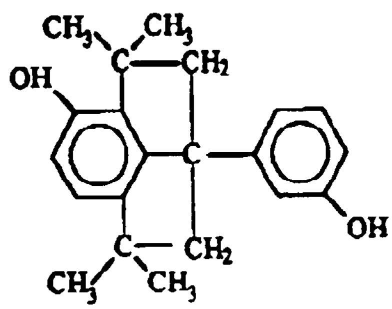

**Chemical Formula 3**

These aromatic dihydroxy compounds may be used alone or in combinations of two or more.

There are also no particular limitations on the carbonic acid diester used in the present invention, with examples including diphenyl carbonate, ditolyl carbonate, bis(chlorophenyl) carbonate, m-cresyl carbonate, dinaphthyl carbonate, bis(diphenylyl) carbonate, diethyl carbonate, dimethyl carbonate, dibutyl carbonate, or dicyclohexyl carbonate, but the substance is not limited to these. Diphenyl carbonate should preferably be used.

These carbonic acid esters may also be used alone or in combinations of two or more.

The aforementioned carbonic acid diester may contain a dicarboxylic acid or a dicarboxylic acid ester. Examples of this dicarboxylic acid or carboxylic acid ester include aromatic carboxylic acids such as terephthalic acid, isophthalic acid, diphenyl terephthalate, or diphenyl isophthalate; aliphatic dicarboxylic acids such as succinic acid, glutaric acid, adipic acid, pimelic acid, suberic acid, azelaic acid, sebacic acid, decanedioic acid, dodecanedioic acid, diphenyl sebacate, diphenyl decanedioate, or diphenyl dodecanedioate; and aliphatic dicarboxylic acids such as dichloropropanedicarboxylic acid, 1,2-cyclopropanedicarboxylic acid, 1,3-cyclobutanedicarboxylic acid, 1,2-cyclopentanedicarboxylic acid, 1,3-cyclopentanedicarboxylic acid, 1,2-cyclohexanedicarboxylic acid, 1,3-cyclohexanedicarboxylic acid, 1,4-cyclohexanedicarboxylic acid, diphenyl cyclopropanedicarboxylate, diphenyl 1,2-cyclobutanedicarboxylate, diphenyl 1,3-cyclobutanedicarboxylate, diphenyl 1,2-cyclopentanedicarboxylate, diphenyl 1,3-cyclopentanedicarboxylate, diphenyl 1,2-cyclohexanedicarboxylate, diphenyl 1,3-cyclohexanedicarboxylate, or diphenyl 1,4-cyclohexanedicarboxylate.

These dicarboxylic acids or dicarboxylic acid esters may be used alone or in combinations of two or more. The dicarboxylic acid or carboxylic acid ester should be contained in the aforementioned carbonic acid diester in an amount of 50 mole % or less, and preferably 30 mole % or less.

In manufacturing polycarbonate, together with the aromatic dihydroxy compound and carbonic acid diester, a polyfunctional compound having three or more functional groups per molecule may also be used. A compound having a phenolic hydroxyl group or a carboxyl group should preferably be used as this polyfunctional compound, with compounds containing three phenolic hydroxyl groups being particularly preferred.

Specific examples of the preferred compound include 1,1,1-tris(4-hydroxyphenyl)ethane, 2,2',2"-tris(4-hydroxyphenyl)diisopropylbenzene, a-methyl-a,a',a'-tris(4-hydroxyphenyl)-1,4-diethylbenzene, a,a',a"-tris(4-hydroxyphenyl)-1,3,5-triisopropylbenzene, phloroglucinol, 4,6-dimethyl-2,4,6-tri(4-hydroxyphenyl)-heptane-2 [*sic*], 1,3,5-tri(4-hydroxyphenyl)benzene, 2,2-bis-[4,4-(4,4'-dihydroxyphenyl)cyclohexyl]propane, trimellitic acid, 1,3,5-benzenetricarboxylic acid, and pyromellitic acid.

The use of 1,1,1-tris(4-hydroxyphenyl)ethane or a,a'-a"-tris(4-hydroxyphenyl)-1,3,5-triisopropylbenzene, etc., is particularly preferred. The polyfunctional compound should preferably be present in the amount of 0.03 moles or less with respect to 1 mole of the aromatic dihydroxy compound, and more preferably in the amount of 0.001-0.02 moles, with 0.001-0.01 moles being particularly preferred.

Moreover, in manufacturing the polycarbonate, one may also use a compound in which one or more end groups having the following formula:

1) HO-,

2) 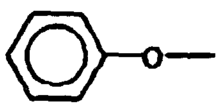 , 3) 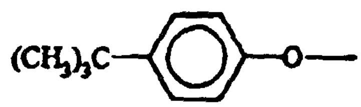 ,

4) 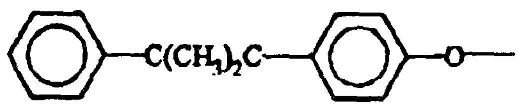 ,

5) 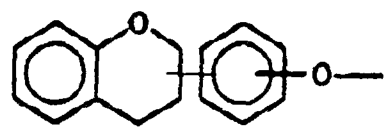 ,

(where the aromatic ring or chromanyl group may be substituted with a halogen or an alkyl group having 1-9 carbon atoms)
can be introduced. Examples of the compound of Formula (I) in which the hydroxyl group can be introduced include diol compounds such as bisphenol A. Moreover, one can also mention phenol, diphenyl carbonate, etc., as examples of the compound of (2) in which a phenoxy group can be introduced; p-t-butylphenol, p-t-butylphenylphenyl carbonate, p-t-butylphenyl carbonate, etc., as examples of the compound of (3) in which a p-t-butylphenoxy group may be introduced; and p-cumylphenol, p-cumylphenylphenyl carbonate, p-cumylphenyl carbonate, etc., as examples of the compound of (4) in which a p-cumylphenoxy group (p-phenylisopropylphenoxy group) may be introduced. One can mention a chromanyl group, etc., having the formula (5) as an example of the chromanylphenoxy group of (5) in the above formula. The following can be mentioned as examples of the compound in which the group of (5) may be introduced: 2,2,4-trimethyl-4-(4-hydroxyphenyl)chroman, 2,2,4,6-tetramethyl-4-(3,5-dimethyl-4-hydroxyphenyl)chroman, 2,3,4-trimethyl-2-ethyl-4-(3-nonyl-4-hydroxyphenyl)-7-nonylchroman, 2,2,4,trimethyl-4-(3,5-diethyl-4-hydroxyphenyl)-6-ethylchroman, 2,2,4,6,8-pentamethyl-4-(3,5-dimethyl-4-hydroxyphenyl)chroman, 2,2,4-triethyl-3-methyl-4-(4-hydroxyphenyl)chroman, 2,2,4-trimethyl-4-(3-bromo-4-hydroxyphenyl)chroman, 2,2,4-trimethyl-4-(3-bromo-4-hydroxyphenyl)-6-bromochroman, 2,2,4-trimethyl-4-(3,5-dibromo-4-hydroxyphenyl)-6-bromochroman, 2,2,4-trimethyl-4-(3,5-dibromo-4-hydroxyphenyl)-6,8-dibromochroman, etc., and of these substances, 2,2,4-trimethyl-4-(4-hydroxyphenyl)chroman is particularly preferred; examples of the compound in which the base of (5-2) may be introduced include 2,2,3-trimethyl-3-(4-hydroxyphenyl)chroman, 2,2,3,6-tetramethyl-3-(3,5-dimethyl-4-hydroxyphenyl)chroman, 2,3,4-trimethyl-2-ethyl-3-(3-nonyl-4-hydroxyphenyl)-7-nonylchroman, 2,2,3-trimethyl-3-(3,5-diethyl-4-hydroxyphenyl)-6-ethylchroman, 2,2,3,6,8-pentamethyl-3-(3,5-dimethyl-4-hydroxyphenyl)chroman, 2,2,3-triethyl-3-methyl-3-(4-hydroxyphenyl)chroman, 2,2,3-trimethyl-3-(3-bromo-4-hydroxyphenyl)-6-bromochroman, 2,2,3-trimethyl-3-(3,5-dibromo-4-hydroxyphenyl)-6-bromochroman, 2,2,3-trimethyl-3-(3,5-dibromo-4-hydroxyphenyl)-6,8-dibromochroman, etc., with 2,2,3-trimethyl-3-(4-hydroxyphenyl)chroman being preferred; examples of the compound in which the group of (5-3) may be introduced include 2,4,4-trimethyl-2-(2-hydroxyphenyl)chroman, 2,4,4,6 tetramethyl-2-(3,5-dimethyl-2-hydroxyphenyl)chroman, 2,3,4-trimethyl-4-ethyl-2-(3,5-dimethyl-2-hydroxyphenyl)-7-nonylchroman, 2,4,4-trimethyl-2-(3,5-dimethyl-2-hydroxyphenyl)-6-ethylchroman, 2,4,4,6,8-pentametyl-2-(3,5-dimethyl-2-hydroxyphenyl)-6-ethylchroman, 2,4,4-trimethyl-2-(3-bromo]-2-hydroxyphenyl)chroman, 2,4,4-trimethyl-2-(3-bromo-2-hydroxyphenyl)-6-bromochroman, 2,4,4-trimethyl-2-(3,5-dibromo-2-hydroxyphenyl)-6-bromochroman, 2,4,4-trimethyl-2-(3,5-dibromo-2-hydroxyphenyl)-6,8-dibromochroman, etc., with 2,4,4-trimethyl-2-2-(hydroxyphenyl)chroman being preferred; examples of compounds in which the group of (5-4) may be introduced include 2,4,4-trimethyl-2-(4-hydroxyphenyl)chroman, 2,4,4,6-tetramethyl-2-(3,5-dimethyl-4-hydroxyphenyl)chroman, 2,4,4-triethyl-2-(4-hydroxyphenyl)chroman, 2,3,4-trimethyl-4-ethyl-2-(3,5-dimethyl-4-hydroxyphenyl)-7-nonylchroman, 2,4,4-trimethyl-2-(3,5-diethyl-4-hydroxyphenyl)-6-ethylchroman, 2,4,4,6,8-pentamethyl-2-(3,5-dimethyl-4-hydroxyphenyl)-6-ethylchroman, 2,4,4-trimethyl-2-(3-bromo-4-hydroxyphenyl)chroman, 2,4,4-trimethyl-2-(3-bromo-4-hydroxyphenyl)-6-bromochroman, 2,4,4-trimethyl-2-(3,5-dibromo-4-hydroxyphenyl)-6-bromochroman, and 2,4,4-trimethyl-2-(3,5-dibromo-4-hydroxyphenyl)-6,8-dibromochroman, etc., with 2,4,4-trimethyl-2-(4-hydroxyphenyl)chroman being preferred.

The aforementioned aromatic ring or aliphatic ring may be further substituted with a halogen or an alkyl group having 1-9 carbon atoms. These compounds may be used alone or in combinations of two or more.

The carbonic acid diester should preferably be used in the amount of 1.00-1.30 moles, and particularly 1.01-1.20 moles, for each mole of the aromatic dihydroxy compound, and the two substances should preferably be reacted in the presence of a catalyst. The compound disclosed in the Specification of Japanese Laid-Open Patent Application 2-175368, submitted by the present Applicant, may be used as the catalyst.

**Examples**

The following is a presentation of the present invention using practical examples. The term "parts" in the practical examples refers to "parts by weight."

**Example 1**

9 kg of polycarbonate having 40% terminal hydroxyl groups (manufactured by Nihon G.E. Plastics K.K.), 1 kg of polybutylene terephthalate (manufactured by Nihon G.E. Plastics K.K.), and 2 g of phosphorous acid were kneaded in a biaxial extruder in order to manufacture pellets. Table 1 shows the physical properties of the blend composition obtained following extrusion molding.

**Example 2**

We proceeded in the same manner as in Practical Example 1, except that 4 g of 50% phosphorous acid aqueous solution was used instead of the phosphorous acid of Practical Example 1. The physical properties of the blend composition obtained following molding are shown in Table 1.

**Example 3**

We proceeded in the same manner as in Practical Example 1, except that 4 g of 50% oxalic acid aqueous solution was used instead of the phosphorous acid of Practical Example 1. The physical properties of the blend composition obtained following molding are shown in Table 1.

**Example 4**

We proceeded in the same manner as in Practical Example 1, except that 2 g of 50% para-toluenesulfonic acid aqueous solution was used instead of the phosphorous acid of Practical Example 1. The physical properties of the blend composition obtained following molding are shown in Table 1.

**Example 5**

We proceeded in the same manner as in Practical Example 1, except that 1 g of butyl para-toluenesulfonate was used instead of the phosphorous acid of Practical Example 1. The physical properties of the blend composition obtained following molding are shown in Table 1.

**Example 6**

We proceeded in the same manner as in Practical Example 1, except that 4 g of 25% ammonium para-toluenesulfonate was used instead of the phosphorous acid of Practical Example 1. The physical properties of the blend composition obtained following molding are shown in Table 1.

**Practical Example 7**

9 kg of polycarbonate containing 70% terminal hydroxyl groups (manufactured by Nihon G.E. Plastics K.K.), 1 kg of polybutylene terephthalate (manufactured by Nihon G.E. Plastics K.K.), and 2 g of phosphorous acid were kneaded in a biaxial extruder in order to manufacture pellets. The physical properties of the blend composition obtained following injection molding are shown in Table 1.

**Example 8**

9 kg of polycarbonate containing 60% terminal hydroxyl groups (manufactured by Nihon G.E. Plastics K.K.), 1 kg of polybutylene terephthalate (manufactured by Mitsui PET Co.), and 2 g of phosphorous acid were kneaded in a biaxial extruder. The physical properties of the blend composition obtained following injection molding are shown in Table 1.

**Example 9**

9 kg of polycarbonate containing 60% terminal hydroxyl groups (manufactured by Nihon G.E. Plastics K.K.), 1 kg of polybutylene terephthalate (manufactured by Mitsui PET Co.), 2 g of phosphorous acid, and 5 g of 20% tetramethylammonium hydroxide aqueous solution were kneaded in a biaxial extruder in order to manufacture pellets. The physical properties of the blend composition obtained following injection molding are shown in Table 1.

**Example 10**

6 kg of polycarbonate containing 60% terminal hydroxyl groups (manufactured by Nihon G.E. Plastics K.K.), 4 kg of polybutylene terephthalate (manufactured by Nihon G.E. Plastics K.K.), and 2 g of phosphorous acid were kneaded in a biaxial extruder (30 mm in diameter, L/D 40) in order to manufacture pellets. The physical properties of the blend composition obtained following injection molding are shown in Table 1.

**Example 11**

9 kg of polycarbonate containing 70% terminal hydroxyl groups (manufactured by Nihon G.E. Plastics K.K.), 1 kg of polybutylene terephthalate (manufactured by Nihon G.E. Plastics K.K.), and 2 g of phosphorous acid were kneaded in a biaxial extruder (30 mm in diameter, L/D 40) in order to manufacture pellets. The physical properties of the blend composition obtained following injection molding are shown in Table 1.

**Comparison Example 1**

9 kg of polycarbonate containing 65% terminal hydroxyl groups (manufactured by Nihon G.E. Plastics K.K.) and 1 kg of polybutylene terephthalate (manufactured by Nihon G.E. Plastics K.K.) were kneaded in a biaxial extruder in order to manufacture pellets. The physical properties of the blend composition obtained following injection molding are shown in Table 1.

**Comparison Example 2**

9 kg of polycarbonate not containing terminal hydroxyl groups (manufactured by Nihon G.E. Plastics K.K.), 1 kg of polybutylene terephthalate (manufactured by Nihon G.E. Plastics K.K.), and 2 g of phosphorous acid were kneaded in a biaxial extruder (30 mm in diameter, L/D 40) in order to manufacture pellets. The physical properties of the blend composition obtained following injection molding are shown in Table 1.

Table 1.

| Optical properties in practical examples and comparison examples | | | | | | |
|---|---|---|---|---|---|---|
| (Injection molded test piece, square plate measuring 3 mm in thickness) | | | | | | |
| | | Ordinary injection molding | | | Retention molding [1)] | |
| | | YI | Optical transmittance | Haze | YI | Haze |
| Practical Examples | 1 | 2.28 | 89.9 | 0.5 | 2.33 | 1.0 |
| | 2 | 2.44 | 89.2 | 0.5 | 2.66 | 1.5 |
| | 3 | 2.68 | 89.0 | 0.5 | 2.99 | 1.2 |
| | 4 | 3.57 | 87.3 | 1.2 | 4.14 | 1.5 |
| | 5 | 2.83 | 88.5 | 0.8 | 3.33 | 1.2 |
| | 6 | 2.89 | 88.7 | 0.7 | 3.47 | 1.2 |
| | 7 | 2.54 | 89.4 | 0.4 | 2.72 | 0.6 |
| | 8 | 2.27 | 87.6 | 6.4 | 2.56 | 6.7 |
| | 9 | 2.46 | 88.0 | 1.6 | 2.67 | 1.5 |
| | 10 | 3.94 | 88.0 | 0.5 | 4.16 | 1.5 |
| | 11 | 6.13 | 85.2 | 1.7 | 9.37 | 1.7 |
| Comparison Examples | 1 | 11.89 | 88.3 | 0.4 | 15.66 | 0.4 |
| | 2 | non-transparent | - | 51.0 | - | - |

[1)] Retained for 10 minutes at 270°C in an injection molding machine

The following is an explanation of the invention by means of additional examples, but the invention is not limited to these examples.

The polyester/polycarbonate resin composition of the present invention provides the same high transparency as conventional resin compositions, and also provides improved thermal stability.

## Claims

1. A process for making a polyester/polycarbonate resin composition comprising a melt blended polycarbonate resin and polyester resin, said polycarbonate resin containing 5-100% terminal hydroxyl groups, reacting by esterification said polycarbonate and said polyester during melt blending in the presence of a catalyst, and subsequently adding acidic substances for deactivating said catalyst and forming a transparent resin.

2. A process for making a polyester/polycarbonate composition according to Claim 1 wherein said polycarbonate resin is an aromatic homopolycarbonate or copolycarbonate formed by reacting a bivalent phenol and a carbonate precursor and said polyester formed by reacting a diol or ester derivative thereof of and a dicarboxylic acid or ester derivative thereof.

3. A process for making a polyester/polycarbonate composition according to Claim 3 wherein said polycarbonate resin contains from 30 to 100% terminal hydroxy groups.

4. A process for making a polyester/polycarbonate composition according to Claim 3 wherein said polycarbonate resin is prepared by an ester exchange reaction of a bivalent phenol and a carbonic acid diester and adjusting the ratio of bivalent phenol to carbonic acid diester to obtain from 30 to 100% terminal hydroxy groups.

5. A process for making a polyester/polycarbonate composition according to Claim 4 wherein said acid substance is a protonic acid having a pKa value of 4 or less.

6. A process for making a polyester/polycarbonate composition according to Claim 4 wherein said acid substance comprises a sulfonic acid ester.

7. A process for making a polyester/polycarbonate composition according to Claim 4 wherein said acid substance is a salt of an acid and a nitrogen-containing basic compound.

**8.** A transparent polyester/polycarbonate composition consisting essentially of a melt-kneaded mixture of from 1-99 parts by weight of polycarbonate having a phenolic hydroxyl group terminal percentage of 5% or above, from 99-1 parts by weight of polyester, and a residue from 0.000005-1 parts by weight of a transesterification catalyst.

**9.** The transparent polyester/polycarbonate composition of claim 8 consisting essentially of a single phase having a single glass transition point.

**10.** The transparent polyester/polycarbonate composition of claim 8 or 9 wherein said catalyst residue is formed by reacting said catalyst with 0.0001-3 parts by weight of a protonic acid.